# EUROPEAN PATENT APPLICATION

(11) **EP 1 528 265 A2**
(43) Date of publication of application: **04.05.2005**
(21) Application number: 04105382.8
(22) Date of filing: 28.10.2004
(51) Int. Cl.: F15B 15/14, F16B 11/00

(54) **Connection arrangement of guide rods with a mounting plate**

(30) Priority: 29.10.2003 DE 20316693 U
(71) Applicant: Bosch Rexroth Teknik AB, 125 81 Stockholm (SE)
(72) Inventor: Stenbom, Björn, 12637, Hägersten (SE); Thunström, Peter, 61073, Vagnhärad (SE); Bohlin, Magnus, 12476, Bandhagen (SE)
(74) Representative: Kietzmann, Lutz

(57) **Abstract**

The invention relates to a connection arrangement between at least two, preferably parallel guide rods (20) for use in a cylinder body (40) and a common mounting plate (10) connected to the at least two guide rods (20) for the guide rods (20) to run parallel and simultaneously, characterized in that the guide rods (20) are connected to the mounting plate (10) by a glue (30).

## Description

This invention relates to a connection arrangement between at least two, preferably parallel guide rods for use in a cylinder body and a common mounting plate connected to the at least two guide rods for the guide rods to run parallel and simultaneously.

In the field of cylinders, particularly pneumatically driven cylinders, there exists a broad variety of cylinders, in which parallel guide rods are moved together inside a common cylinder body. These guide rods usually end in a common stiff plate, usually a mounting plate.

However, in order for the cylinder to operate smoothly, the guide rods need to run very parallel. Therefore, connecting two or more separately guided guiding rods rigidly into one or more stiff plates creates alignment difficulties. Up to date, all parts of such a cylinder need to be produced with very high demand on the machining tolerances. This goes for the cylinder body, the length and diameter of the guide rods and the stiff plates on both sides of the guiding rods.

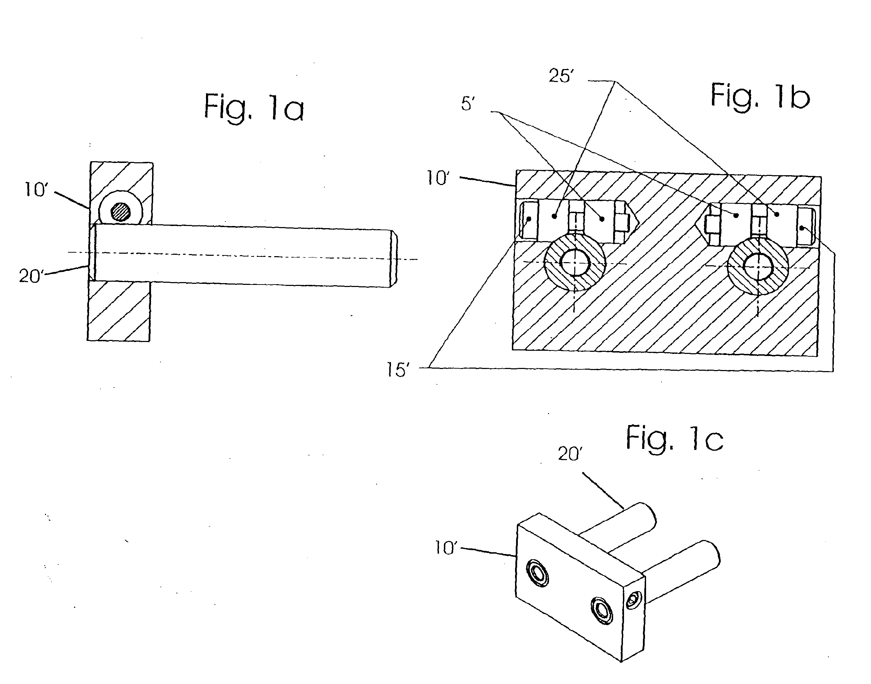

Since the connection between the guide rods and the cylinders is used for the transmission of force, it has been common belief amongst the skilled persons in the art that the connection must be either force-fit or positive-fit. Therefore, most solutions of connecting two or more guide rods to a common mounting plate involved screws as can be seen in Figs. 1a-c which show one assembly of two guide rods and a common mounting plate known in the prior art:
Fig. 1a shows a schematic cross-sectional view through an guide rod and a mounting plate connected via a crew/wedge connection as known in prior art;
Fig. 1b shows a schematic cross-sectional view through the mounting plate of Fig. 1a; and
Fig. 1c shows a schematic view of the guide rod/mounting plate assembly of Figs. 1a and 1b.

As can be seen throughout Figs 1a to 1c, the guide rods 20' are connected to the mounting plate 10' via a crew/wedge connection. Two screws 25' with two wedges 5' and 15' are used to fix the guide rods to the mounting plates. However, the radial distance between the two guide rods is important for a smooth operation of the cylinder. Furthermore, the plate holes holding the guide rods have to be parallel and the wedges 5' and 15' force the guide rods to the bottom of the holes. Through the force needed to fix the guide rods in the mounting plate, the wedges 5' and 15' tend to deform, thus making the disassembly of an assembled guide rod/mounting plate assembly difficult. Furthermore many parts are needed, causing a complicated assembly.

The biggest drawback is that through the fixation via screws, moment is introduced into the connection when the screw is tightened.

Further solutions known from the prior art include axial screws mounted in the guiding rods and the mounting plate. However, moment is introduced into the connection, too. The guide rods have to be at equal length with only a small degree of tolerance. Furthermore, the demand on mating surfaces to be parallel for both guides is very high.

Another solution known in the prior art includes stop screw, which is introduced in the mounting plate. Here, too, moment is introduced in the connection. The plate holes have to be parallel, again, and the stop screw forces the guide to the bottom of the holes. Furthermore, the radial distance between the guides is important.

In all prior art solutions used in the field, screws are used for fixation of the guide rods to the mounting plate. However, the usage of screws bears the danger of introducing moment in the cylinder, when the screws are tightened, thereby causing misalignment. Furthermore, for small diameter cylinders, where a guide or piston rod with a small diameter is used, a screw joint unit is too weak for some applications.

Therefore it is an object of the present invention to provide a safe connection between at least two parallel guide rods and a common mounting plate which is easy to introduce, meets the stability demands in the field and allows a lesser demand of machining tolerance of the components of a cylinder.

This object is solved by a connection with the features of claim 1. According to the present invention, a connection between at least two, preferably parallel guide rods for use in a cylinder body and a common mounting plate is characterized in that the guide rods are glued to the mounting plate.

Surprisingly it has been found that a connection by glueing is able to meet the stability demands in the field, while allowing lesser demands on machining tolerance.

In a preferred embodiment of the present invention, the glue is selected form a group comprising anaerobic glue, cyanoacrylate glue, multicomponent glue, acryl glue, single component glue and ceramic glue. An anaerobic glue that has already proven in practice is Loctite 603 together with activator 7649.

The connection between the mounting plate and the guiding rods can be done in various ways, either that especially in the case that anaerobic glue is used, the two surfaces are merely pressed together. In case a hardening step is needed, this can preferably either be done with heat or via an anionic reaction. Other preferred ways of performing the connection between the mounting plate and the guiding rods is via the use of a multicomponent glue or via a single component glue together with an activator.

A preferred connection between the mounting plate and the guiding rods is achieved via using surfaces with the proper roughness that are carefully cleaned, supplied with activator and, after a delay of 1-2 minutes, supplyment of glue on all surfaces, putting the parts together and a further delay of 5 minutes, after which the connection has been set.

In another preferred embodiment of the present invention, the mounting plate comprises at least two mounting holes, equal to the number of guide rods, whereby each mounting hole corresponds with a guide rod and the diameter of the mounting hole is greater than the diameter of the corresponding guide rod to such an extent as to provide for a layer of glue around the guide rod for correction of malproduction of the cylinder body, the guide rods and/or the mounting plate.

In a further preferred embodiment of the present invention, the at least one mounting hole of the mounting plate is formed as a bottom hole, wherein the glue totally surrounds the end portion of the corresponding guide rod which is inserted in the mounting hole.
A connection arrangement as described above can e.g. be used in a pneumatic cylinder.

By using a connection according to the present invention, the demand of machining tolerance of the assembly parts can be lowered by a considerable extent. The glue also allows a larger clearance between the guide rods and the mounting plates. The exact length of the guide rods becomes unimportant to a certain extent since the differences can be equalized by the glue. Furthermore, no moment is introduced in the construction by screwing.

Further advantages and features of the present invention are disclosed in the subclaims and will become apparent of the following description of a preferred embodiment of the present invention together with the accompanying figures, in which
- Fig. 1a: shows a schematic cross-sectional view through a prior art guide rod and a mounting plate connected via a crew/wedge connection as known in prior art (discussed above);
- Fig. 1b: shows a schematic cross-sectional view through the prior art mounting plate of Fig. 1a (discussed above);
- Fig. 1c: shows a schematic view of the prior art guide rod/ mounting plate assembly of Figs. 1a and 1b (discussed above);
- Fig. 2: shows a cylinder with a connection according to the present invention between the guide rods and the mounting plate
- Fig. 3: shows a cross-sectional schematic side view of the cylinder of Fig. 2
- Fig. 4: shows a cross-sectional view along line II-II of Fig. 3.

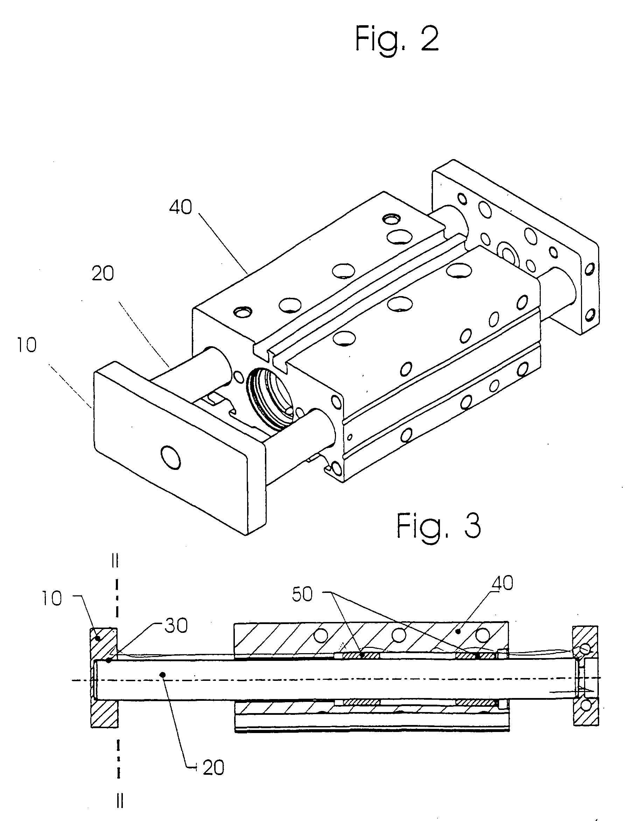

Fig. 2 shows a cylinder 40, in which two parallel guide rods 20 with a common mounting plate 10 are assembled therein. The present invention is, however, not limited to two guiding rods, but also only one guiding rod or more than two guiding rods may be used.
Cylinder 40, guiding rods 20 and mounting plate 10 are as such known from the state of the art and are not described in detail, however, any components known in the field may be used within the present invention.

As shown in Fig. 3, the guide rods extend through the cylinder body 40 and are held by two seals 50. Via further components (not shown in the figs) the guide rods may be moved back and forth, thus causing further devices (not shown in the figs) assembled to the mounting plate 10 to move in a desired direction.

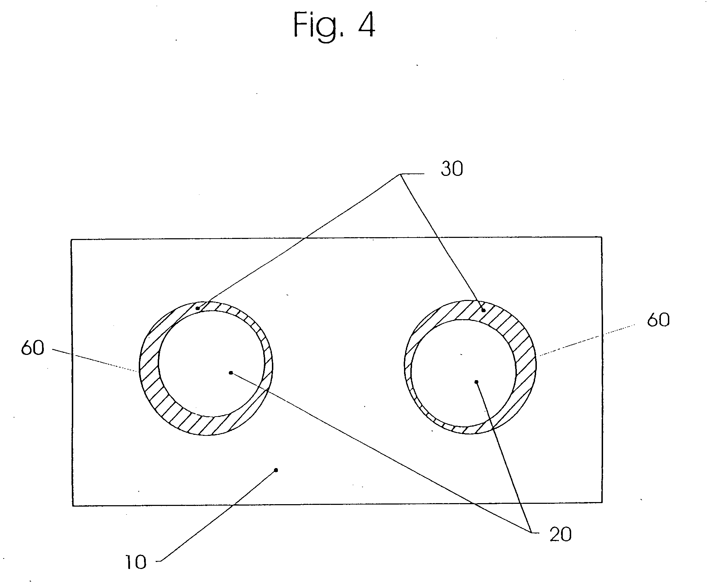

As shown in Fig. 4, in a further and preferred embodiment of the present invention, the mounting plate 10 has two mounting holes 60 corresponding to the two guide rods 20. The diameter of the mounting holes 60 inside the mounting plate 10 is preferably greater than the diameter of the corresponding guide rod 20 to such an extent as to provide for a layer of glue 30 around the guide rod 20 for correction of malproduction of the cylinder body 40, the guide rods 20, the seals 50 and/or the mounting plate 10 or other components of the cylinder.

As shown in Figs. 2 to 4, in another preferred embodiment the mounting plate 10 is formed in such a way that the mounting holes 60 are formed as bottom holes, wherein the glue 30 totally surrounds the end portion of the corresponding guide rod 20 which is inserted in the mounting hole 60. By that way, a flat and smooth outer surface of the mounting plate 10 can be achieved easily, whereas in the prior art solution as shown in Fig. 1c, the outer surface of the mounting plate 10' is not flat due to the end portions of the guide rods 20'.

### Reference signs

- **5'**: wedge
- **10**: mounting plate
- **10'**: mounting plate
- **15'**: wedge
- **20**: guide rod
- **20'**: guide rod
- **25'**: screw
- **30**: glue
- **40**: cylinder body
- **50**: seal
- **60**: mounting holes

## Claims

1. Connection arrangement between at least two, preferably parallel guide rods (20) for use in a cylinder body (40) and a common mounting plate (10) connected to the at least two guide rods (20) for the guide rods (20) to run parallel and simultaneously,
**characterized in that** the guide rods (20) are connected to the mounting plate (10) by a glue (30).

2. Connection arrangement according to Claim 1,
**characterized in that** the glue (30) is selected from a group comprising anaerobic glue, cyanoacrylate glue, multicomponent glue, acryl glue, single component glue and ceramic glue.

3. Connection arrangement according to Claim 1 and 2,
**characterized in that** the connection is achieved via using surfaces of mounting plate (10) and/or guide rods (20) with the proper roughness that are carefully cleaned, supplied with activator and, after a delay of 1-2 minutes, supplyment of glue (30) on all surfaces, putting the parts together and a further delay of 5 minutes.

4. Connection arrangement according to any of the Claims 1 to 3,
**characterized in that** the mounting plate (10) comprises at least two mounting holes (60), equal to the number of guide rods (20), whereby each mounting hole (60) corresponds with a guide rod (20) and the diameter of the mounting hole (60) is greater than the diameter of the corresponding guide rod (20) to such an extent as to provide for a layer of glue (30) around the guide rod (20) for correction of malproduction of the cylinder body (40), the guide rods (20) and/or the mounting plate (10).

5. Connection arrangement according to any of the Claims 1 to 4,
**characterized in that** the at least one mounting hole (60) of the mounting plate (10) is formed as a bottom hole, wherein the glue (30) totally surrounds the end portion of the corresponding guide rod (20) which is inserted in the mounting hole (60).

6. Pneumatic cylinder comprising a connection arrangement according to any of the claims 1 to 5
